# EUROPEAN PATENT APPLICATION

(11) **EP 4 276 818 A1**
(43) Date of publication of application: **15.11.2023**
(21) Application number: 21927677.1
(22) Date of filing: 14.12.2021
(51) Int. Cl.: G10L 17/22, G10L 15/26, G10L 21/0272, G06K 9/00

(54) **SPEECH OPERATION METHOD FOR DEVICE, APPARATUS, AND ELECTRONIC DEVICE**

(30) Priority: 26.02.2021 CN 202110218188
(71) Applicant: Huawei Technologies Co., Ltd., Shenzhen, Guangdong 518129 (CN)
(72) Inventor: XU, Zhe, Shenzhen, Guangdong 518129 (CN); CHEN, Tianluo, Shenzhen, Guangdong 518129 (CN); QIN, Lei, Shenzhen, Guangdong 518129 (CN); LU, Yuewan, Shenzhen, Guangdong 518129 (CN)
(74) Representative: MERH-IP Matias Erny Reichl Hoffmann Patentanwälte PartG mbB
(86) International application number: PCT/CN2021/137640
(87) International publication number: WO 2022/179253

(57) **Abstract**

A speech operation method for a device, including: obtaining a video collected by a camera; obtaining speech information collected by a microphone; detecting a face image in the video; extracting a lip feature and a facial feature of the face image; determining a time interval based on the lip feature; capturing a corresponding audio clip from the speech information based on the time interval; obtaining voiceprint information based on the facial feature; and performing speech recognition on the audio clip based on the voiceprint information, to obtain the speech information. By using the method, a speech operation of a device is performed, and there is no need to determine a target user in advance and record voiceprint information of the target user in advance. When a plurality of users simultaneously use the device, voiceprint information of the plurality of users may be autonomously extracted, and speech is separated one by one. A voiceprint may be autonomously updated and registered. Using the method to perform a speech operation on the device may significantly improve a speech recognition effect of the device in a noisy or multi-user speaking scenario.

## Description

This application claims priority to Chinese Patent Application No. 202110218188.7, filed with the China National Intellectual Property Administration on February 26, 2021 and entitled "SPEECH OPERATION METHOD AND APPARATUS FOR DEVICE AND ELECTRONIC DEVICE", which is incorporated herein by reference in its entirety.

### TECHNICAL FIELD

This application relates to the field of speech recognition technologies, and in particular, relates to a speech operation method and apparatus for a device, and an electronic device.

### BACKGROUND

Speech recognition technology, also referred to as automatic speech recognition (Automatic Speech Recognition, ASR), aims to convert vocabulary content in human speech into computer-readable input, such as a button, a binary code, or a character sequence. Speech recognition is different from speaker recognition and speaker confirmation. Speaker recognition and speaker confirmation technologies attempt to recognize or confirm a speaker who makes a speech, rather than vocabulary content and meaning included in the speech. A biggest advantage of the speech recognition technology is that the speech recognition technology makes man-machine interaction more natural and an interactive device easier to use.

In recent years, a speech recognition technology in a speaking-alone scenario has developed mature, and an existing speech recognition ASR technology may effectively recognize a speech signal of a single speaker as a text. However, in a noisy environment, especially in a multi-user speaking scenario or when a background speech exists in a use environment, a speech recognition effect of an existing speech recognition system greatly deteriorates.

Performance of the speech recognition system depends on quality of the speech signal and whether a single speaker or a plurality of speakers exist. The quality of the speech signal may be controlled and optimized through a conventional technology or method like echo cancellation, noise suppression, and automatic gain control adjustment, and a problem of speech recognition in a multi-user speaking scenario needs to be resolved urgently.

### SUMMARY

To resolve the foregoing problem, embodiments of this application provide a speech operation method and apparatus for a device, and an electronic device.

According to a first aspect, embodiments of this application provide a speech operation method for a device, where the method includes: obtaining a video collected by a camera; obtaining speech information collected by a microphone; detecting a face image in the video; extracting a lip feature and a facial feature of the face image; determining a time interval based on the lip feature; capturing a corresponding audio clip from the speech information based on the time interval; obtaining voiceprint information based on the facial feature; and performing speech recognition on the audio clip based on the voiceprint information, to obtain the speech information. In this way, the device may autonomously perform registration management of voiceprint information of a plurality of users, autonomously extract voiceprint information of each user in a process in which the plurality of users perform a speech operation by simultaneously using the device, and separate speeches one by one based on a user identity, to obtain the speech information.

In an implementation, the obtaining speech information further includes: detecting whether the face image exists in the video; and recording the speech information when the face image exists. In this way, power consumption of the device may be reduced.

In an implementation, a quantity of users is more than one, and the detecting a face image in the video, and extracting a lip feature and a facial feature of the face image includes: detecting a first face image and a second face image in the video, extracting a first lip feature and a first facial feature from the first face image, and extracting a second lip feature and a second facial feature from the second face image. In this way, an identity and a speaking state of the user may be identified.

In an implementation, the determining a time interval based on the lip feature and the capturing a corresponding audio clip from the speech information based on the time interval include: determining a first time interval based on the first lip feature; capturing a first audio clip from the speech information based on the first time interval; determining a second time interval based on the second lip feature; and capturing a second audio clip from the speech information based on the second time interval. In this way, by using the method, a time interval of each audio clip may be aligned with a time interval in which each face image in the video is in a speaking state.

In an implementation, the obtaining voiceprint information of the user includes: searching for corresponding voiceprint information in the device based on the facial feature, and obtaining the voiceprint information of the user. In this way, in a process in which the device is used to perform a speech operation, the voiceprint information of the user may be autonomously extracted.

In an implementation, the obtaining voiceprint information of the user includes: searching for corresponding voiceprint information in the device based on the first facial feature, and obtaining first voiceprint information; and searching for corresponding voiceprint information in the device based on the second facial feature, and obtaining second voiceprint information. When a plurality of users perform a speech operation by simultaneously using the device, voiceprint information of each user may be autonomously extracted.

In an implementation, the obtaining voiceprint information of the user includes: searching for corresponding voiceprint information in the device based on the facial feature, and if a search result is that the corresponding voiceprint information does not exist, determining, based on the time interval, a third time interval in which the user is speaking alone; and capturing a third audio clip from the speech information based on the third time interval, and extracting a voiceprint feature of the third audio clip, and obtaining the voiceprint information of the user. In this way, in a process in which the device is used to perform the speech operation, the device may autonomously perform voiceprint registration on a new user, and obtain voiceprint information of the new user, without adding an additional registration operation. In an implementation, the obtaining voiceprint information of the user includes: searching for corresponding voiceprint information in the device based on the facial feature, and if a search result is that the corresponding voiceprint information does not exist, determining, based on a difference between the first time interval and the second time interval, a third time interval in which it is determined that the user is speaking alone; and capturing a third audio clip from the speech information based on the third time interval, extracting a voiceprint feature of the third audio clip, and obtaining the voiceprint information of the user. In this way, in a process in which the device is used to perform the speech operation, the device may autonomously perform voiceprint registration on the new user, and ensure that a definition of a voiceprint registered by the new user may meet a use requirement, without adding the additional registration operation.

In an implementation, the capturing a third audio clip from the speech information based on the third time interval, and extracting a voiceprint feature of the third audio clip further includes: recursively extracting, by using a TDAA algorithm, an audio signal whose audio feature strength is highest in descending order from the third audio clip, and deducing a quantity of users in a speaking state based on a quantity of extracted audio signals; and extracting the voiceprint feature of the third audio clip when the quantity of users in the speaking state is 1. In this way, it is further ensured that the definition of the voiceprint registered by the new user may meet the use requirement, without adding the additional registration operation.

In an implementation, the obtaining voiceprint information of the user includes: establishing a correspondence between a facial feature and the voiceprint information of the user, and storing the facial feature and the voiceprint feature. In this way, the device may autonomously manage the registered voiceprint information, and obtain the corresponding voiceprint information by searching for the facial feature.

In an implementation, the performing speech recognition on the audio clip based on the voiceprint information, to obtain the speech information includes: performing speech separation on the first audio clip based on the first voiceprint feature, to obtain first audio information; performing speech recognition on the first audio information, to obtain first speech information; performing speech separation on the second audio clip based on the second voiceprint feature, to obtain second audio information; and performing speech recognition on the second audio information, to obtain second speech information. In this way, the device may autonomously extract voiceprint information of each user, separate speech information of each user one by one, and recognize an intention or an instruction of the speech information of each user. In this way, a problem of disorder of the intention or the instruction of the speech recognition caused by a plurality of pieces of speech information overlapping with each other is avoided.

In an implementation, the method further includes: obtaining a registration time point of the voiceprint feature, and if the registration time point of the voiceprint feature exceeds a preset valid time period, extracting a third voiceprint feature based on the audio clip, and updating the voiceprint information to the third voiceprint feature.

In an implementation, the updating the voiceprint information to the third voiceprint feature includes: comparing the third voiceprint feature with the voiceprint feature, and keeping one of the two voiceprint features that is capable of meeting a use requirement, where the voiceprint feature that meets the use requirement is a clean and clear voiceprint feature. In this way, an old voiceprint feature of the user may be updated, to ensure an effect of speech recognition.

According to a second aspect, embodiments of this application provide a speech operation apparatus for a device. For beneficial effects, refer to descriptions in the first aspect. The apparatus includes: a main control module, configured to obtain a video collected by a camera; and obtain speech information collected by a microphone; a face detection module, configured to detect a face image in the video; an image recognition module, configured to extract a lip feature and a facial feature of the face image; a lip feature recognition module, configured to determine a time interval based on the lip feature, and capture a corresponding audio clip from the speech information based on the time interval; a voiceprint extraction module, configured to obtain voiceprint information based on the facial feature; and a speech recognition module, configured to perform speech recognition on the audio clip based on the voiceprint information, to obtain the speech information.

According to a third aspect, embodiments of this application provide an electronic device. For beneficial effects, refer to descriptions in the first aspect. The electronic device includes a memory and a processor. The processor is configured to execute computer-executable instructions stored in the memory, and the processor runs the computer-executable instructions to perform the speech operation method for a device according to any one of the foregoing implementations.

According to a fourth aspect, embodiments of this application provide a storage medium. For beneficial effects, refer to descriptions in the first aspect. The storage medium includes a readable storage medium and a computer program stored in the readable storage medium, and the computer program is configured to implement the speech operation method for a device according to any one of the foregoing implementations.

### BRIEF DESCRIPTION OF DRAWINGS

To describe the technical solutions in a plurality of embodiments disclosed in this specification more clearly, the following briefly describes the accompanying drawings used in describing the embodiments. It is clearly that the accompanying drawings in the following description show merely the plurality of embodiments disclosed in this specification, and a person of ordinary skill in the art may still derive other drawings from these accompanying drawings without creative efforts.

The following briefly describes the accompanying drawings that need to be used in the descriptions of embodiments or a conventional technology.
FIG. 1 is a diagram of an application scenario of a speech operation method for a device according to an embodiment of this application;
FIG. 2 is a system framework diagram of a speech operation method for a device according to this application;
FIG. 3A is a flowchart of a speech operation method for a device according to Embodiment 1 of this application;
FIG. 3B is a flowchart of autonomously extracting a voiceprint by a new user;
FIG. 4 is a module interaction diagram of a speech operation method for a device according to Embodiment 1 of this application;
FIG. 5A and FIG. 5B are flowcharts of performing speech separation in parallel by a plurality of users in a speech operation method for a device according to Embodiment 2 of this application;
FIG. 6A and FIG. 6B are module interaction diagrams in which a plurality of users perform speech separation in parallel in a speech operation method for a device according to Embodiment 2 of this application;
FIG. 7 is a flowchart in which a device autonomously updates voiceprint information of a plurality of users in a speech operation method for a device according to Embodiment 3 of this application;
FIG. 8A and FIG. 8B are module interaction diagrams in which a device autonomously updates voiceprint information of a plurality of users in a speech operation method for a device according to Embodiment 3 of this application; and
FIG. 9 is a schematic diagram of an electronic device according to an embodiment of this application.

### DESCRIPTION OF EMBODIMENTS

The following describes the technical solutions in embodiments of this application with reference to the accompanying drawings in embodiments of this application.

In a solution, a speech separation method is used for speech recognition. A voiceprint of a target speaker is extracted from a clip of reference speech of the target speaker for registration. The voiceprint is used as a clue, to extract a speech part of the target speaker from mixed speeches, and speech recognition is subsequently performed on the extracted speech in an activation manner of a wakeup vocabulary. The solution is applicable to a scenario in which personnel are fixed and voiceprint registration is convenient. However, when a speech of the target speaker is separated in a multi-speaker scenario, the solution is easily interfered by speech activities of surrounding people. It is difficult to recognize the separated speech, and a subsequent speech recognition effect is not ideal.

Another disadvantage of the solution is that the voiceprint of the target speaker needs to be registered in advance. Speech information of the target speaker corresponding to the registered voiceprint is extracted from the mixed speeches that includes a plurality of users simultaneously speaking based on the registered voiceprint, and the extracted speech information is used as a separate speech for speech recognition. In the process, original speech information corresponding to the voiceprint used for registration needs to meet requirements of a specific time length and a speech definition, and special users such as an elderly person and a child who are unfamiliar with a voiceprint registration requirement and an operation method need to be completed under specific guidance, resulting in poor user experience and a low participation degree.

Another disadvantage is that the target speaker needs to be selected in advance when the solution is used to separate a speech. If an identity of each speaker cannot be determined in advance based on audio information of the mixed speeches in the multi-user scenario in which a speaker changes, a to-be-separated target speaker cannot be determined in advance, and a registered voiceprint of the to-be-separated speaker cannot be obtained in advance, resulting in poor availability.

In addition, as time changes, a speech of the target speaker participating in registration changes due to a change of a physiological feature. This causes a drift of a voiceprint feature of the target speaker, and consequently, an effect of performing speech separation by using a preregistered voiceprint of the target speaker deteriorates. The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

To resolve the foregoing problem, embodiments of this application provide a speech operation method for a device, so that the device may autonomously perform registration management of the voiceprint information of a plurality of users, autonomously extract voiceprint information of each user in a process in which the plurality of users perform a speech operation by simultaneously using the device, and separate a speech one by one based on a user identity. For a device that performs speech recognition and operation by using the method, the target user does not need to be determined in advance before being used, the voiceprint information of the target user does not need to be recorded in advance, and voiceprint information of the to-be-separated target user does not need to be selected. This may significantly improve a speech recognition effect in a noisy or multi-user speaking scenario.

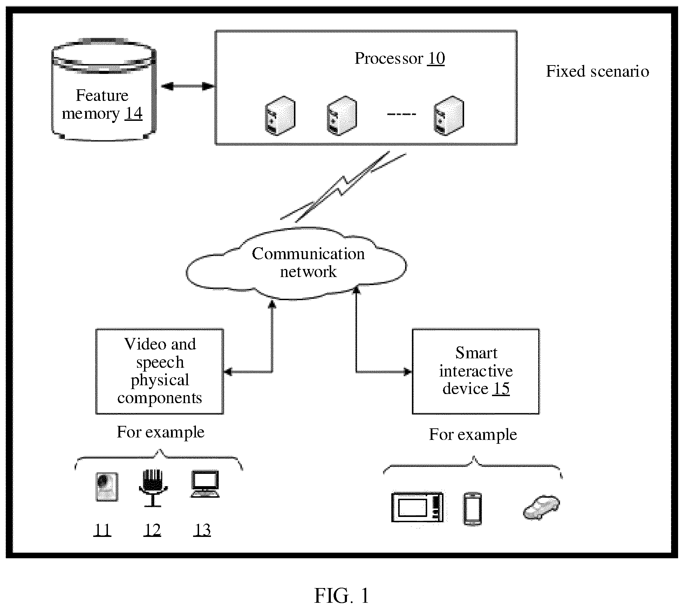

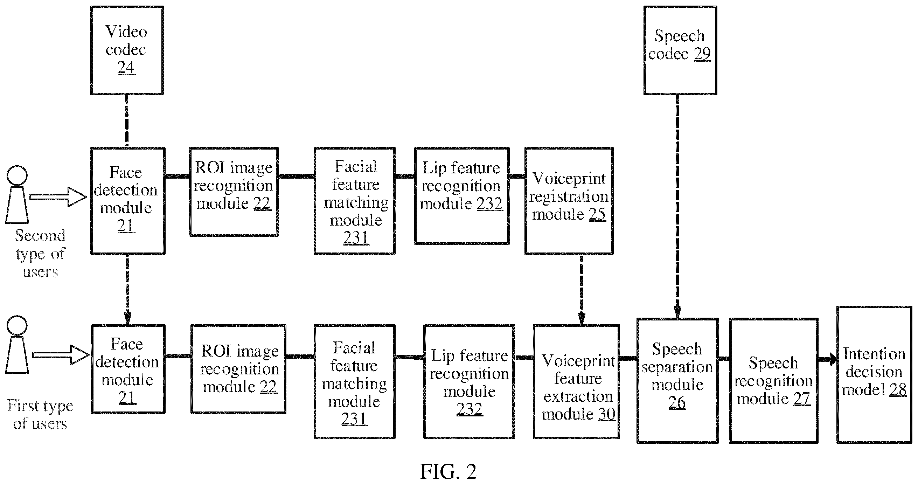

First, refer to FIG. 1 and FIG. 2. A speech operation method for a device provided in this application is described.

FIG. 1 is a diagram of an application scenario of a speech operation method for a device according to an embodiment of this application. As shown in FIG. 1, the speech operation method for the device provided in embodiments of this application is particularly suitable for a scenario in which a user changes, for example, a conference room, an exhibition hall, or an exhibition booth, and is also suitable for a fixed scenario in which the user is stable.

A smart device is a device that performs video and speech interaction with the user. To perform the speech operation method for the device provided in embodiments of this application, some physical components that may be communicatively connected need to be mounted on the smart device in these scenarios. For example, the physical component may include a vehicle-mounted terminal used in a vehicle, a smart television used in a home scenario, a smart screen used in the conference room, the exhibition hall, or the exhibition booth, a smartphone that may be connected to the foregoing smart device, and the like. The vehicle-mounted terminal device is also referred to as an electronic control unit (electronic control unit, ECU), a domain control unit (domain control unit, DCU), a mobile data center (mobile data center, MDC), or the like. The physical component includes components such as a processor 10, a camera 11, a sound receiving device 12, a display 13, a feature memory 14, a remote controller 15, and a speaker 16. The processor 10 may be a CPU, an MCU, an NPU, a GPU, a DSP, an ISP, or the like. The processor 10 executes some or all application programs of the speech operation method for the device provided in embodiments of this application. The camera 11 may be a camera that is in an internal communication connection of the vehicle-mounted terminal or the smart device, or may be a camera that is in an external communication connection of the vehicle-mounted terminal or the smart device, and is configured to shoot a video in a specific range in a current scenario. A video format output by the camera 11 includes MPEG, AVI, nAVI, ASF, MOV, 3GP, WMV, DivX, XviD, RM, RMVB, FLV/F4V, and the like. The sound receiving device 12 records original speech information of the user in a sound receiving range in the current scenario. The sound receiving device 12 includes an integrated microphone, a microphone or a microphone array connected to the smart device, or a microphone or a microphone array that is communicatively connected to the smart device through a short-distance connection technology. A format of speech information output by the sound receiving device 12 includes WAV, MP3, AAC, OGG, WMA, OPUS, FLAC, APE, M4A, AMR, and the like. The display 13 displays, based on a user speech, recognized text information, an accepted user instruction, and a user identity recognition result. The feature memory 14 stores registration information of the user, including a facial feature of a face, a voiceprint feature, a user profile, and personalized information. The user profile includes a user identity, gender, an age group, and user group features. The personalized information includes a personal preference and a historical use record collected based on historical use information. The remote controller 15 starts the camera 11 or the sound receiving device 12 that is connected to the smart device through a short-distance connection technology. The speaker 16 performs speech interaction between the device and the user, including playing a speech recognition result, a suggestion, and an interactive operation prompt.

FIG. 2 is a system framework diagram of a speech operation method for a device according to this application. As shown in FIG. 2, logical functional modules required by a processor 10 to perform the method include a main control module 20, a face detection module 21, an image recognition module 22, a state determining module 23, a facial feature matching module 231, a lip feature recognition module 232, a video codec 24, a voiceprint registration module 25, a speech separation module 26, a speech recognition module 27, an intention selection module 28, a speech codec 29, and a voiceprint extraction module 30. The state determining module 23 includes the facial feature matching module 231 and the lip feature recognition module 232.

A specific solution concept includes: The main control module 20 of the device starts shooting a video based on the camera 11, to obtain a continuous image stream, performs face detection on the continuous image stream through the face detection module 21, or decodes, through the video codec 24, a video on which format conversion needs to be performed, to obtain the continuous image stream, and then performs face detection on each picture in the continuous image stream. Whether a user using the device exists in a current environment is detected, and after detecting the user, the main control module 20 starts the sound receiving device 12 to record a speech file in real time, and records speech information of the user. The image recognition module 22 recognizes a face image of each user in the video/continuous image stream, and recognizes an identity of each user. The facial feature matching module 231 is used to recognize that a current user is an existing user who has registered a voiceprint feature in the device or a new user who does not register a voiceprint feature in the device; and for a plurality of existing users using the device, registration information of each existing user is separately determined. Then, a voiceprint feature previously stored in the device is obtained based on the registration information of each existing user. The lip feature recognition module 232 is used to obtain a time interval in which a location of a lip feature on a face image in a video changes. The voiceprint registration module 25 obtains audio information from the sound receiving device 12, captures continuous audio clips corresponding to the time interval in which the location of the lip feature changes, obtains a voiceprint feature when a single new user speaks alone, and stores the voiceprint feature of the new user. The voiceprint extraction module 30 extracts a voiceprint feature of each user stored in the device, decodes speech information requiring format conversion through the speech codec 29 to obtain continuous audio information, sends the voiceprint feature of each user and corresponding audio information to the speech separation module 26 in parallel, and performs speech separation for each existing user by using the corresponding voiceprint feature. Mixed speeches of a plurality of users may be sent to one speech separation module and are performed in parallel, or sent to a plurality of speech separation modules in parallel for simultaneous speech separation. Next, speech recognition is performed on the separated audio information of each existing user, and the speech recognition module 27 separately obtains, based on voiceprint information, speech information of each user operating a current device. Finally, the intention selection module 28 separately executes, based on intention priority or matching correlation, intention of the plurality of users operating the current device and a corresponding instruction based on the recognized speech information.

In the foregoing solution, when the plurality of users simultaneously send speech commands to a device, voiceprint information of each user may be autonomously extracted, speech information of each user is separated one by one, and an intention or an instruction of the speech information of each user is recognized. In addition, a problem of disorder of the intention or the instruction of the speech recognition caused by a plurality of pieces of speech information overlapping each other is avoided, and effects of the speech recognition and speech operations of the device in a scenario in which the plurality of users simultaneously speak are further optimized.

For each new user who does not register voiceprint information in the device, the voiceprint registration module 25 selects speech information corresponding to the new user when the new user speaks alone, and obtains and stores the voiceprint feature, so that the device autonomously registers the voiceprint feature of the new user, and the voiceprint feature of the new user may be directly used to separate the mixed speeches of the plurality of users subsequently.

Further, for a problem that a voiceprint feature of a registered user changes with time and a voiceprint feature drifts, in a process of using the device by the user, an identity of the user who currently uses the device may be recognized, and a situation of a voiceprint feature corresponding to the user may be checked. If a registration time point of a corresponding voiceprint feature is early and needs to be updated, in the process of using the device by the user, the voiceprint registration module 25 is used to obtain a new voiceprint feature of the user, and an old voiceprint feature of the user is updated, to ensure an effect of the speech recognition.

The voiceprint in this application is a voiceprint feature obtained by extracting original speech information including a user through a conventional algorithm, and the voiceprint feature is used to separate a single piece of speech information from the mixed speeches. The original speech information includes a file in a format like WAV, MP3, AAC, OGG, WMA, OPUS, FLAC, APE, M4A or AMR, and the conventional algorithm includes a machine learning algorithm and/or a deep learning algorithm. In this application, contents described by the voiceprint, the voiceprint information, the voiceprint feature, voiceprint data, and the voiceprint feature information in the following description are consistent, and are all voiceprint features obtained after original speech information including a speaker is extracted through the conventional algorithm.

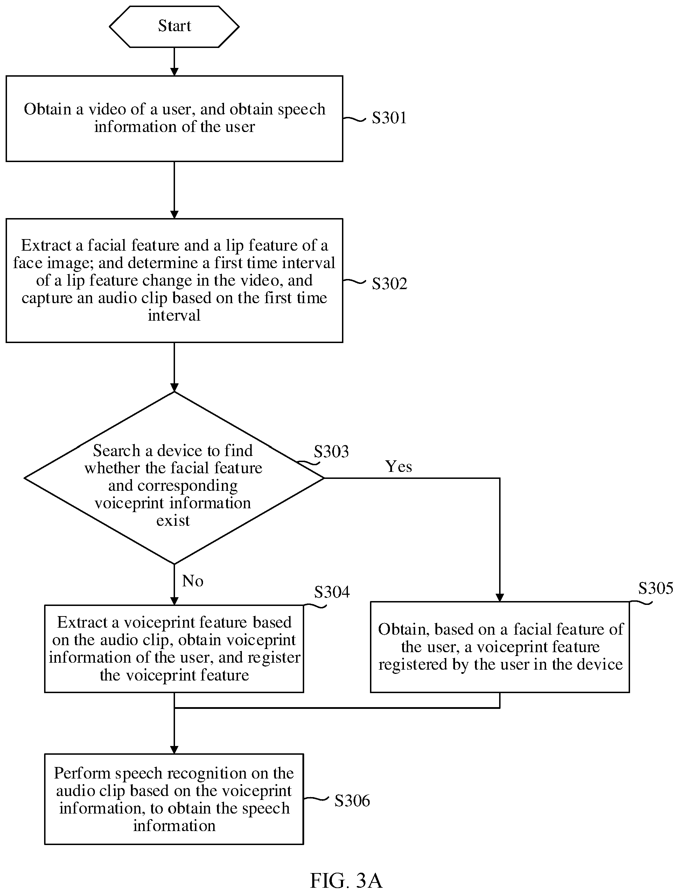

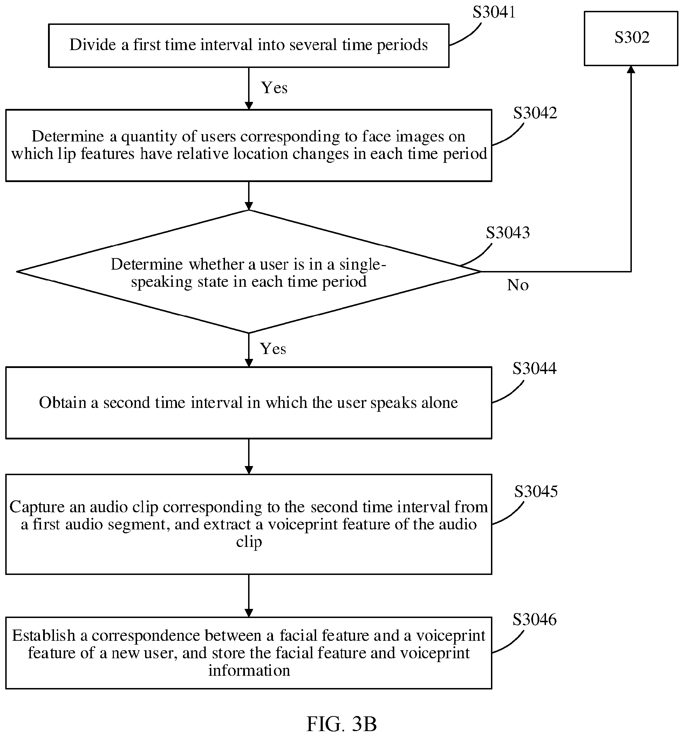

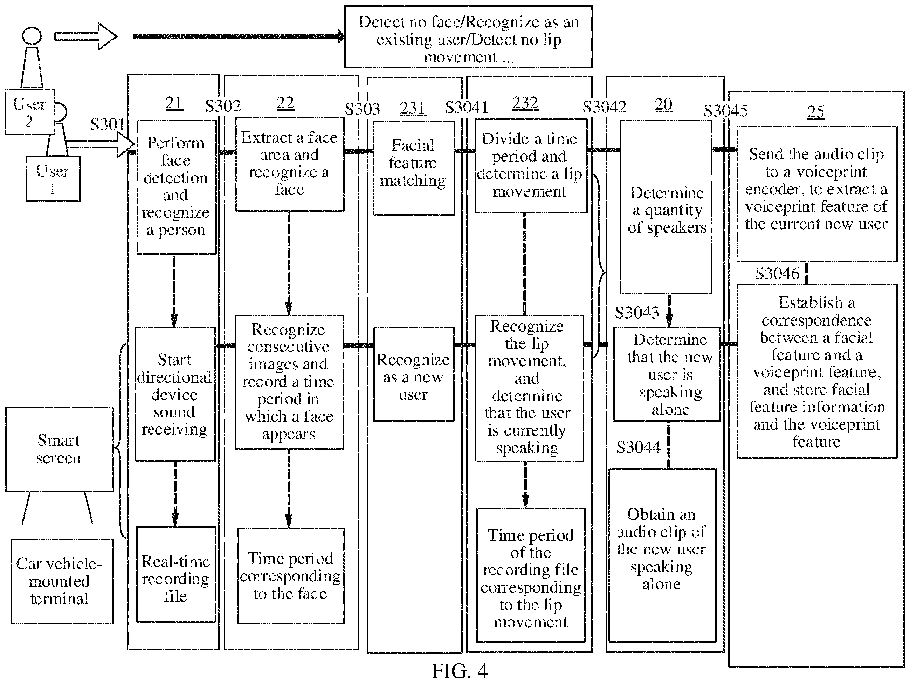

The following describes the technical solution in Embodiment 1 of this application with reference to FIG. 3A, FIG. 3B, and FIG. 4. FIG. 3A is a flowchart of autonomously extracting a voiceprint by a new user in a speech operation method for a device according to Embodiment 1 of this application. As shown in FIG. 3A, the method includes the following steps.

S301. Obtain a video of a user in an environment around a device collected by a camera 11, and obtain speech information of the user collected by a sound receiving device 12.

In a possible implementation, a processor 10 sends an instruction to start the camera 11, and detects, based on whether a face image exists in a video shot by the camera 11, whether a user exists in a current environment. If the user exists, the processor 10 sends an instruction to start the sound receiving device 12, to synchronously record the speech information of the user.

Optionally, the camera 11 includes an embedded camera built in a smart device, for example, a built-in camera like a smartphone or a smart screen, or an external camera connected to the smart device.

Optionally, a video output by the camera 11 may be in one of the following formats, for example, MPEG, AVI, nAVI, ASF, MOV, 3GP, WMV, DivX, XviD, RM, RMVB, and FLV/F4V. The processor 10 may decode, through a video codec 24, a video that requires format conversion, to obtain a continuous image stream.

Optionally, the speech information recorded by the sound receiving device 12 may be in one of the following formats, for example, WAV, MP3, AAC, OGG, WMA, OPUS, FLAC, APE, M4A and AMR. The processor 10 may decode, through a speech codec 29, speech information that requires format conversion, to obtain a continuous audio stream.

In a possible implementation, the processor 10 may further first start the sound receiving device 12, to record speech information in a current environment, and detect, through a speech recognition technology, whether a user who speaks exists in the current environment, and if yes, start the camera 11, to record a video of the user.

In a possible implementation, the processor 10 may further perform detection in a specific space of an infrared sensor, and detect, through an infrared recognition technology, whether a user who uses the device exists. If yes, the processor 10 starts the camera 11, to record the video file of the user, and starts the sound receiving device 12 to record a speech file in real time and record the speech information of the user.

In a possible implementation, the processor 10 may further detect, through a proximity sensor, in a space of a specific distance, whether the user who uses the device exists at a location close to the current device. If yes, the processor 10 starts the camera 11, to record the video file of the user, and starts the sound receiving device 12 to record a speech file in real time and record the speech information of the user.

For example, the sound receiving device 12 may be a microphone, and the processor 10 gives an instruction to start the microphone, to record the speech information of the user in a specific sound receiving range in a current scenario.

Optionally, the sound receiving device 12 may be a microphone array. The processor 10 gives an instruction to start the microphone array, performs directional sound receiving on the user based on a sound source positioning technology of the microphone array, and records the speech information of the user in the sound receiving range in the current scenario. Directional sound receiving may improve a signal-to-noise ratio (to be specific, the larger the ratio obtained by a signal dividing noise, the higher the signal-to-noise ratio of a useful signal) of speech information, a definition, and recognition.

Optionally, a sound source positioning technology of a conventional microphone array may be used to perform directional sound receiving for the user. For example, a time of arrival (toa), controllable wave velocity forming, or a positioning technology based on a subspace may be used to perform sound source positioning, or a multi-sound source positioning technology based on a music algorithm may be used to perform directional sound receiving on a plurality of users.

When there are a plurality of speakers close to the device in the current environment, the speech information recorded in real time through the sound receiving device 12 is mixed speech information.

S302. Detect a face image in the video, and extract a facial feature and a lip feature of the face image; determine a time interval based on the lip feature; and capture a corresponding audio clip from speech information based on the time interval.

Optionally, a quantity of different faces may be counted based on the face image in the continuous image stream, to determine a quantity of users in front of the device, where the quantity of users may be one or more; and a quantity of users in a speaking state in front of the device may also be counted based on a quantity of face images in the continuous image stream in which a relative location of the lip feature changes, where the quantity of users in the speaking state may be one or more.

In a possible implementation, the processor 10 obtains the continuous image stream and the corresponding time interval from the video, recognizes a face image of each user in the continuous image stream, and extracts a facial feature and a lip feature of each user from the face image of each user.

For example, when the quantity of users is more than one, a face image of one user in the video may be used as a first face image, and a face image of any other user may be used as a second face image. The first face image and the second face image in the video are detected, a first lip feature and a first facial feature are extracted from the first face image, and a second lip feature and a second facial feature are extracted from the second face image.

In a possible implementation, a face image corresponding to each user in the continuous image stream is detected in parallel, a time interval in which each user is in a speaking state is obtained based on a relative location change of a lip feature of each face image in the continuous image stream, and each audio clip corresponding to each time interval is captured from the recorded speech information, so that a time interval of each audio clip may be aligned with the time interval in which each face image in the video is in the speaking state.

For example, a first time interval may be determined based on a relative location change of the first lip feature on the first face image in the continuous image stream; a first audio clip is captured from the speech information based on the first time interval; a second time interval is determined based on a relative location change of the second lip feature on the second face image in the continuous image stream; and a second audio clip is captured from the speech information based on the second time interval.

For example, if the processor 10 performs image recognition on each frame of image in the video, and an obtained time interval in which a user A is in a speaking state is 7:05 to 7:20 a.m., an audio clip corresponding to the time period 7:05 to 7:20 a.m. is captured from the speech information recorded by the sound receiving device 12 in real time. If a time interval in which a user B is in a speaking state is 7:10 to 7:25 a.m., an audio clip corresponding to the time period 7: 10 to 7:25 a.m. is captured from the speech information recorded by the sound receiving device 12 in real time.

S303. Obtain voiceprint information based on the facial feature.

In a possible implementation, the feature memory 14 of the device is searched for, based on the facial feature of the user in each face image, whether the facial feature and a voiceprint feature that matches the facial feature exist. If a search result is that the facial feature and the voiceprint feature that matches the facial feature do not exist, a user corresponding to the facial feature is a new user, a voiceprint feature of the new user needs to be registered, and S304 is performed; or if a search result is that the facial feature and the voiceprint feature that matches the facial feature exist, a user corresponding to the facial feature is an existing user, and S305 is performed.

For example, for an existing user who has registered the facial feature and the voiceprint feature of the existing user in the device, the facial feature and the voiceprint feature of the existing user are stored in the feature memory 14 of the device, and the voiceprint feature of the existing user may be found based on the facial feature. A user who does not store the facial feature and the voiceprint feature of the user in the device is a new user, the facial feature and the voiceprint feature of the new user need to be registered in the device, and stored in the feature memory 14 of the device.

S304. Extract a voiceprint feature based on an audio clip, obtain voiceprint information of a new user, and register the voiceprint information.

A prerequisite for performing voiceprint feature extraction is that a new user in a sound receiving range of the sound receiving device is speaking alone, to ensure that quality of the voiceprint feature is clean and clear, and may meet use requirements of speech separation and speech recognition.

In a preferred implementation, a third time interval in which the user is speaking alone may be determined based on a difference between the first time interval and the second time interval.

In a possible implementation, if all users are in a detection range of the camera, as shown in FIG. 3B, the following steps are performed to obtain the voiceprint information of the new user.

S3041. Divide a video into several time intervals based on a time interval in which a relative location of a lip feature changes in a face image. For example, in the video clip from 7:05 to 7:20 a.m., there are face images of the user A and the user B. A time interval in which a relative location of the lip feature changes in the face image of the user A is 7:05 to 7: 10, and a time interval in which a relative location of the lip feature changes in the face image of the user B is 7: 10 to 7:15.

S3042. Determine, based on a difference between a first time interval and a second time interval, a time period in which a user is speaking alone.

For example, if the user A is a new user, the time interval 7:05 to 7:10 in which the relative location of the lip feature changes in the face image of the user A is the first time interval, and a time interval 7:08 to 7:15 in which the relative location of the lip feature changes in the face image of the user B is a second time interval, it may be determined that a time period in which the user A is speaking alone is 7:05 to 7:08, and a time period in which the user B is speaking alone is 7: 10 to 7:15.

If the first time interval in which the face image of the user A appears is 7:05 to 7: 10, and the second time interval in which the face image of the user B appears is 7:03 to 7:15, the time period in which the user A is speaking alone cannot be determined, and S302 may be performed, to determine, based on a next frame of video, the time period in which the user A is speaking alone.

S3043. Determine, based on the time period in which the user is speaking alone in the video, a time interval in which the user speaks alone. The time interval is denoted as a third time interval.

Optionally, if there are a plurality of time periods in which the new user is speaking alone in the video, an earliest time period may be selected as the third time interval based on a time sequence.

Optionally, if there are a plurality of new users in the video, a time period in which each new user is speaking alone is determined.

S3044. Capture a third audio clip from speech information based on the time period in which the user is speaking alone in the video.

In a possible implementation, to ensure that the quality of the voiceprint is clear and that the use requirement is met, it needs to be determined whether the quantity of users in the speaking state in the third audio clip is 1. If a determining result is "yes", the audio clip is an audio clip in which the new user is speaking alone, and a voiceprint extraction condition is met, S3045 is performed. If the audio clip is an audio clip in which the new user is not speaking alone, S302 is performed, to determine, based on a next frame of video, the time period in which the user is speaking alone.

In a possible implementation, if the user speaks outside a camera range, a top-down auditory attention algorithm (top-down auditory attention, TDAA for short) may be used to deduce a quantity of speakers. For a third audio clip recorded by the sound receiving device in the sound receiving range, audio signals in descending order of corresponding strength are extracted from the audio clip in descending order based on strength of audio features such as volume, a signal-to-noise ratio, a definition, or recognition, and are recursively extracted until the audio signals cannot be extracted. The quantity of users in the speaking state is deduced based on a quantity of extracted audio signals.

For example, for a third audio clip in the time period 7:05 to 7:08, the TDAA algorithm is used to recursively extract an audio signal with a highest recognition degree from the third audio clip in descending order, and the quantity of users in the speaking state is deduced. When one user speaks in the third audio clip in the time period 7:05 to 7:08, the time period is a time period in which the new user is speaking alone, and the voiceprint extraction condition is met, S3045 is performed. If it is deduced, by using the TDAA algorithm, that the quantity of users in the speaking state in the time period is greater than 1, S302 is performed.

Optionally, if there are a plurality of new users in the video, a corresponding third audio clip is captured from the speech information based on the time period in which each new user is speaking alone.

Optionally, if there are a plurality of time periods in which a new user is speaking alone in the video, a plurality of corresponding third audio clips may be captured from the speech information based on each time period of speaking alone.

S3045. Extract a voiceprint feature of the third audio clip, to obtain voiceprint information of a new user.

Optionally, for a plurality of new users, a corresponding voiceprint feature may be extracted from a third audio clip corresponding to each new user.

Optionally, if a new user has a plurality of third audio clips of speaking alone, a corresponding voiceprint feature may be extracted from each third audio clip, quality of each voiceprint feature is compared, and a voiceprint feature whose quality is the cleanest and clearest and that may meet use requirements of speech separation and speech recognition is selected and used as the voiceprint information of the new user.

S3046. Establish a correspondence between the facial feature and the voiceprint feature of the new user, and store the facial feature and the voiceprint information to a feature memory 14, to complete registration of the facial feature and the voiceprint feature of the new user in the device.

For example, the facial feature and the voiceprint information of the new user are set to a same ID or an associated ID.

Optionally, the facial feature and the voiceprint information of the new user are stored in personal registration information of the user in the feature memory 14.

S305. Obtain, based on the facial feature of the user, a voiceprint feature registered by the user in the device.

In a possible implementation, when a quantity of users is more than one, a facial feature of each user is extracted from a face image of each user, and the facial feature of each user and a corresponding voiceprint feature are queried from the feature memory 14 of the device based on the facial feature of each user.

For example, corresponding voiceprint information may be searched for in the device based on the facial feature corresponding to the user A, to obtain the first voiceprint information corresponding to the user A; and corresponding voiceprint information may be searched for in the device based on the facial feature of the user B, to obtain the second voiceprint information corresponding to the user B.

Optionally, registration information of each user may be obtained from the feature memory 14 of the device based on a facial feature of each user. The registration information includes a facial feature, a voiceprint feature, a user profile, and personalized information of the user. The user profile includes an identity, a gender, an age group, and a group feature of the user. The personalized information includes personal preferences and a historical use record of the user that are counted based on historical use information.

S306. Perform speech recognition on the first audio clip based on the voiceprint information, to obtain the speech information.

In a possible implementation, when a quantity of users is more than one, speech separation may be performed on the first audio clip based on a voiceprint feature of each user, audio information corresponding to each user is extracted, speech recognition is performed on the audio information of each user, and speech information sent by each user to the device is obtained.

For example, speech separation may be performed on the first audio clip based on the first voiceprint feature corresponding to the user A, to obtain the first audio information; speech recognition is performed on the first audio information, to obtain the first speech information sent by the user A; speech separation is performed on the second audio clip based on the second voiceprint feature corresponding to the user B, to obtain the second audio information; and speech recognition is performed on the second audio information, to obtain the second speech information sent by the user B.

For example, the speech information sent by the user to the device includes an intention or an instruction sent by the user to operate the device.

In the method provided in Embodiment 1 of this application, an interaction process of a functional module for autonomous voiceprint registration by a new user is shown in FIG. 4, and details are not described again.

When a plurality of users use the device, each face image and facial feature in the current image are determined. When a voiceprint extraction condition is met, for a new user who does not have voiceprint feature information in the device, voiceprint feature extraction is performed on corresponding speech information when the user speaks alone and the extracted voiceprint feature is stored. The extracted voiceprint feature may be directly used for speech separation in a multi-user scenario subsequently. This resolves a problem that a speech recognition effect is greatly deteriorated in a noisy environment, especially in a multi-user speaking scenario in a current ASR solution.

For a device like a smart screen/car vehicle-mounted terminal, being simultaneously used by a plurality of users is one of common usage scenarios of the device. The plurality of users are simultaneously in a detection range of a camera 11 of the device and a sound receiving range of a microphone 12, and common speech/noise interference further exists in an environment. When the user performs speech interaction with the smart device, the device autonomously recognizes the user, and autonomously completes voiceprint recording and extraction of a new user at a proper occasion, to complete registration of a voiceprint feature of the new user. This reduces a threshold for using the speech separation method and improves usability of the speech separation method. When speech separation needs to be performed on the new user, because the device may autonomously obtain voiceprint information of the new user, smoothness of an interaction process is not interrupted. This improves a speech separation effect.

According to the speech operation method for the device provided in Embodiment 1 of this application, when the camera 11 recognizes that the user is not registered in a current smart device and only the user speaks in a current environment, speech information of the user is collected for voiceprint extraction, and subsequently, in a multi-user scenario, the voiceprint feature of the user is directly used to perform speech separation. In this solution, a target user does not need to be specified to register the voiceprint feature information in advance, to avoid introducing additional steps, and resolve a problem that a special group such as elderly people and children have a low participation degree due to complex operations in a process of using the device.

According to the speech operation method for the device provided in Embodiment 1 of this application, the facial feature of the user is obtained through the camera 11, and the facial feature is used as an identity of the user. In a process of using the device, a corresponding voiceprint feature may be directly determined and selected for the user who speaks in a current scenario. This resolves a problem that a user identity cannot be determined and a voiceprint cannot be selected in a multi-user scenario.

When speech separation is performed on the plurality of users in the multi-user scenario, because a smart device in the conventional technology directly performs speech recognition on speech information, when there are a plurality of speakers in a current environment, texts corresponding to speech information of each speaker are mixed together, and the speech information cannot be determined.

In Embodiment 2 of this application, current audio information of each user is further extracted based on Embodiment 1, the separated speech information of the plurality of users is sent to the speech recognition module 27, and an intention or an instruction of each user is obtained to operate the current device.

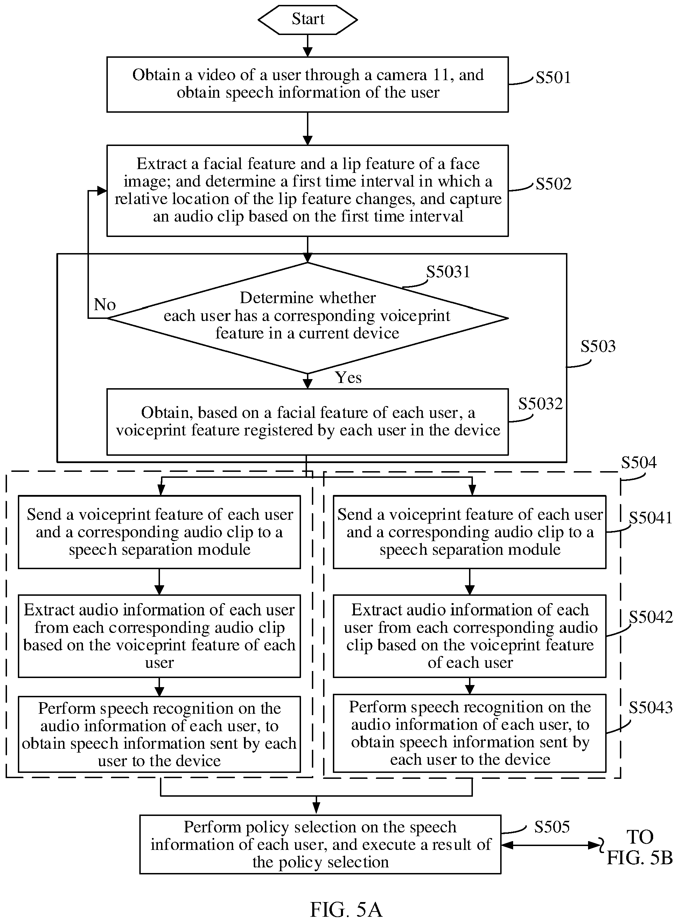

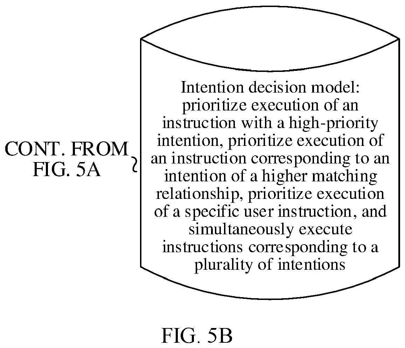

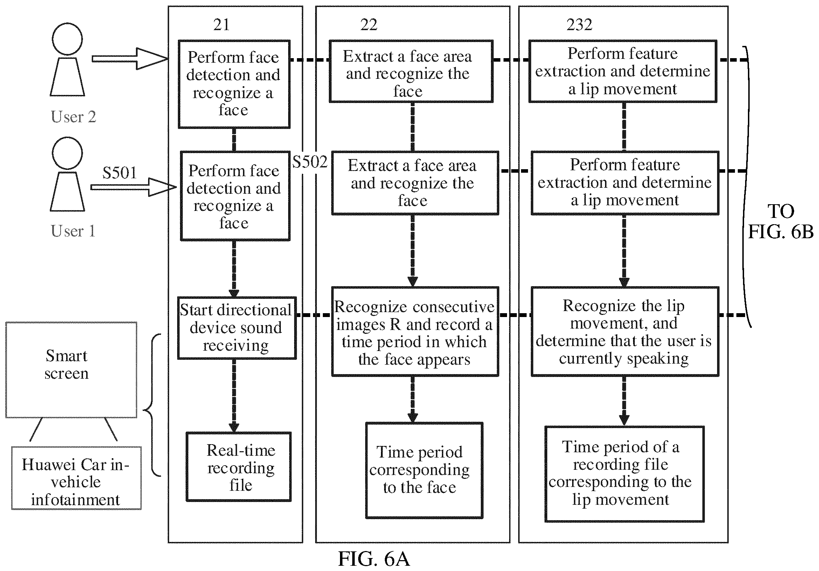

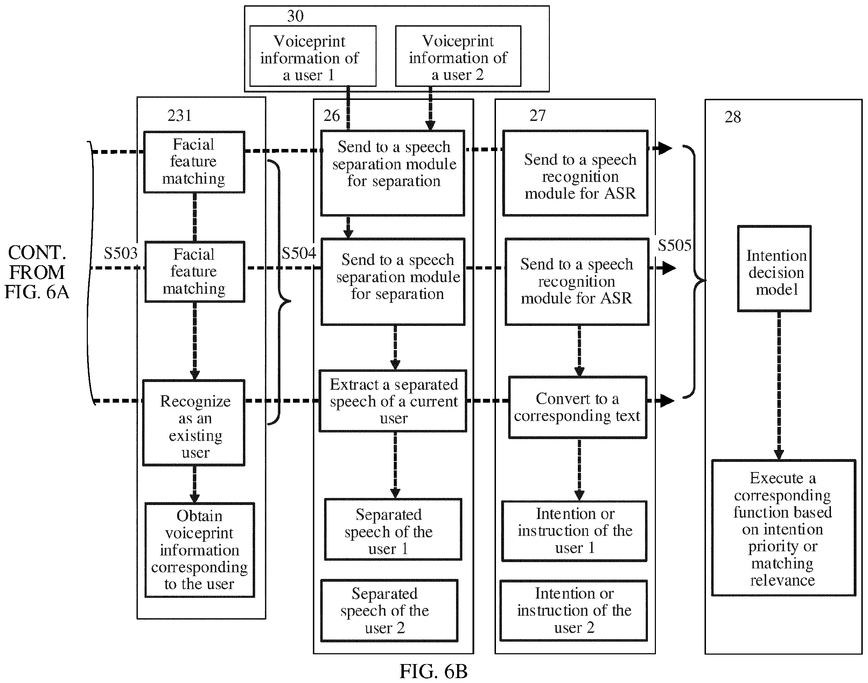

The following describes the technical solutions in Embodiment 2 of this application with reference to the accompanying drawings FIG. 5A and FIG. 5B and FIG. 6A and FIG. 6B in embodiments of this application. In a multi-user interaction scenario, when the plurality of users perform speech operations on the device, a parallel speech separation solution may be used. For a result of the parallel speech separation, an execution sequence of a plurality of instructions or intentions is selected based on speech operation intention selection logic of the plurality of users.

FIG. 5A and FIG. 5B are flowcharts of performing speech separation in parallel by a plurality of users in a speech operation method for a device according to Embodiment 2 of this application. As shown in FIG. 5A and FIG. 5B, the method includes the following steps.

S501. Obtain a video of a user in an environment around a device collected by a camera 11, and obtain speech information of the user collected by a sound receiving device 12. A specific implementation is similar to S301 in Embodiment 1, and details are not described herein again.

S502. Detect a face image in the video, and extract a facial feature and a lip feature of the face image; determine a time interval in which a relative location of the lip feature in the video changes on the face image, and capture a corresponding audio clip from the speech information based on the time interval. A specific implementation is similar to S302 in Embodiment 1, and details are not described herein again.

S503. Recognize the user based on the facial feature, and obtain voiceprint information of the user.

In a possible implementation, a quantity of users is more than one. A facial feature of each user may be matched with a facial feature stored in a current device, to determine whether the user is an existing user. For the existing user, a voiceprint feature registered in the device by the existing user is obtained. It may be implemented by performing the following steps.

S5031. Determine whether a user corresponding to a facial feature in a face image has the facial feature and corresponding voiceprint information in a current device, and if a determining result is "yes", the user is an existing user, and perform S5032; or if a determining result is "no", the user is a new user, and perform S304.

For example, a feature memory 14 of the device may be searched for based on the face image to determine whether a voiceprint feature matching the facial feature exists. If a search result is that the voiceprint feature exists, a user corresponding to the face is an existing user, the voiceprint feature of the existing user does not need to be registered, and S5032 is performed; and if a search result is that the voiceprint feature does not exist, a user corresponding to the face is a new user, a voiceprint feature of the new user needs to be registered, and S304 is performed.

S5032. Obtain, based on a facial feature of each user, a voiceprint feature registered by each user in the device.

In a possible implementation, a facial feature of each user is extracted from a face image of each user, and the facial feature of each user and a corresponding voiceprint feature are queried from the feature memory 14 of the device based on the facial feature of each user.

Optionally, registration information of each user may be obtained from the feature memory 14 of the device based on a facial feature of the user. The registration information includes a registered facial feature, a voiceprint feature, a user profile, and personalized information of the user. The user profile includes an identity, a gender, an age group, and a group feature of the user. The personalized information includes personal preferences and a historical use record of the user that are counted based on historical use information.

S504. Perform speech recognition on the voiceprint feature of each user and a corresponding audio clip in parallel, and obtain speech information sent by each user to the device.

In a possible implementation, the speech intention or instruction of each user may be obtained by performing the following S5041 to S5043.

S5041. Send a voiceprint feature of each user and a corresponding audio clip to a speech separation module 26 for speech separation.

Optionally, a processor 10 may send the voiceprint feature of each user and the corresponding audio clip to one speech separation module 26 for parallel processing, or may send the voiceprint feature of each user and the corresponding audio clip to a corresponding quantity of speech separation modules 26 for parallel speech separation processing.

S5042. The speech separation module 26 extracts audio information of each user from the corresponding audio clip based on the voiceprint feature of each user.

S5043. Perform speech recognition on the audio information of each user, to obtain speech information sent by each user to a device.

In a possible implementation, a speech recognition module 27 separately performs speech recognition on the audio information of each user, to obtain a recognition result corresponding to each piece of audio information.

In a possible implementation, a speech recognition result of each user may be input into a semantic recognition model. The semantic recognition model performs general search based on a user profile of each user and an input speech recognition result, to obtain a text corresponding to the speech recognition result of each user, and obtains, based on the corresponding text, speech information sent by each user to the device.

The user profile includes the user identity, the gender, the age group, user group information, and a language.

Due to differences in geographical locations and regions, many regions have their own speech features, and each person speaks at a different tone, a different speaking speed, and the like. Therefore, personalized training may be performed on the semantic recognition model, so that the semantic recognition model adapts to an accent, a dialect, a common vocabulary, and the like with personal characteristics. This improves accuracy of speech recognition.

For example, a user in Shaanxi sends an instruction "I want to buy ***" to a smart device, and a speech recognition result may be "I want to sell * * *". A processor 10 of the device obtains, based on registration information of the user, that a user profile is Zhang *, male, aged 49, native to Shaanxi, and a farmer, and then inputs the speech recognition result "I want to sell ***" of the user into a trained semantic recognition model, the semantic recognition model performs, based on a speech recognition result of the user and the user profile, general search on a language of a male farmer who speaks Chinese, lives in Shaanxi, and is under 50 years old, determines a search field as a range of Chinese to Shaanxi dialect, and may further recognize speech information with local characteristics in an audio signal, to obtain that speech information sent by the user to the device is "I want to buy ^{∗∗∗}".

In a possible implementation, registration information of each user may be obtained from the device based on the facial feature, personalized information of each user may be obtained based on the registration information of each user, and personalized speech recognition is performed based on a recognition result of audio information of each user based on the personalized information, to obtain speech information sent by each user to the device.

For example, the registration information includes a user name, a user id, and a user recognition code; the personalized information includes a preference of each person among users, a category of interest, and a historical use record; and the speech information sent by each user to the device includes an intention or an instruction sent by each user to operate the device.

For example, historical information such as a type of interest and a preference may be obtained from an app used by the user based on the registration information of each user, and personalized speech recognition is performed based on the historical information, to obtain the speech information sent by each user to the device.

For example, the user sends an instruction "Please open ***" to a smart device. The processor 10 of the device may obtain, based on the registration information of the user, historical information of an app in which the user is interested from apps used by the user, and perform matching on a recognition result of audio information based on the historical information, to quickly obtain that the speech information sent by the user to the device is "Please open ^{∗∗∗}".

Optionally, the speech information sent by the user to the device includes an intention or an instruction of operating the current device, and the intention or instruction of operating the current device by each user may be converted into a corresponding text, and the text is displayed on a display screen of the smart device.

In this solution, by performing personalized recognition on the speech information sent by each user to the device, accuracy and correlation of speech recognition may be increased.

S505. Perform policy selection on the speech information of each user, and execute the speech information of each user based on a result of the policy selection.

In a possible implementation, training of the policy selection is performed on an intention decision model by using a speech information set having a priority identifier, so that the intention decision model may be sorted based on priorities or a matching relationship of the speech information, and output in sequence.

In a possible implementation, speech information of each user may be input into a pretrained intention decision model, and policy selection of the intention decision model includes:

a. An instruction with a high priority is preferentially executed. For example, in a home scenario, a user 1 and a user 2 simultaneously use a smart screen device. In this case, a mobile phone of the user 1 receives an incoming call and needs to be muted, and a speech instruction of the user 1 is "Please mute". The user 2 wants to switch a channel, and a speech instruction of the user 2 is "Please switch a channel". The processor 10 inputs the muting instruction and the channel switching instruction into the intention decision model. Because a muting intention is more realtime, a speech information sequence output by the intention decision model is muting-channel switching. A main control module 20 preferentially executes the muting instruction, and then executes the channel switching instruction.

b. An instruction corresponding to an intention with a higher matching relationship is preferentially executed. For example, in the home scenario, the user 1 and the user 2 simultaneously use the smart screen device. A speech instruction recognition effect of the user 1 is good, a speech recognition result is clearly matched, an execution intention is clear, or recognition reliability is high, and the speech instruction may be directly executed. A speech recognition result of the current recognition is unclear due to a speech speed, a distance, an accent, or the like of the speech instruction of the user 2. The processor 10 inputs the speech instruction of the user 1 and the speech instruction of the user 2 into the intention decision model. In this case, a speech information sequence output by the intention decision model is the speech instruction of the user 1-the speech instruction of the user 2, and the main control module 20 preferentially executes the speech instruction of the user 1, and then executes or does not execute the instruction of the user 2. The intention of the user 1 is preferentially presented on a display screen of the smart device, and then the instruction of the user 2 is presented or not presented.

c. An instruction of a specific user is preferentially executed. For example, in a vehicle-mounted terminal, a priority of a vehicle owner, a driver, or a parent of the vehicle-mounted terminal is higher than a priority of a visitor, a passenger, and a child. When a plurality of users simultaneously control the vehicle-mounted terminal, the processor 10 inputs speech instructions of the plurality of users into the intention decision model, the intention decision model preferentially outputs an instruction of a high-priority user, and the main control module 20 preferentially executes the instruction of the high-priority user.

In the method provided in Embodiment 2 of this application, an interaction process of a functional module in which a plurality of users perform speech separation in parallel is shown in FIG. 6A and FIG. 6B, and details are not described again.

In Embodiment 2 of this application, intentions or instructions of the plurality of users may be executed based on an intention priority or a matching correlation sequence, to resolve a problem that when the plurality of users simultaneously give speech commands, a plurality of commands overlap with each other, and consequently, recognized intentions are disordered. For example, the user 1 and the user 2 simultaneously give speech commands in front of the device, a text of the speech command given by the user 1 is A1A2A3A4, and a text of the speech command given by the user 2 is B 1B2B3B4. If the user 1 and the user 2 simultaneously speak, a conventional speech recognition method may recognize A1B1A2B2A3B3A4B4, resulting in a complete semantic recognition result error. However, the solution in Embodiment 2 of this application may effectively separate an intention and an instruction of the user 1 and an intention and an instruction of the user 2 who simultaneously speak. This resolves a problem that a semantic recognition effect of simultaneous speaking is poor in a multi-user scenario, so that an effect of a speech intention executed by the device is greatly improved, and experience of a man-machine interaction speech operation is improved.

The speech operation method for the device provided in Embodiment 2 of this application is particularly applicable to a scenario in which a person is fixed, for example, a smart device like a smart screen in a vehicle, a home, or a conference room. In a multi-user scenario in which a person is not fixed, there is still good speech interaction experience.

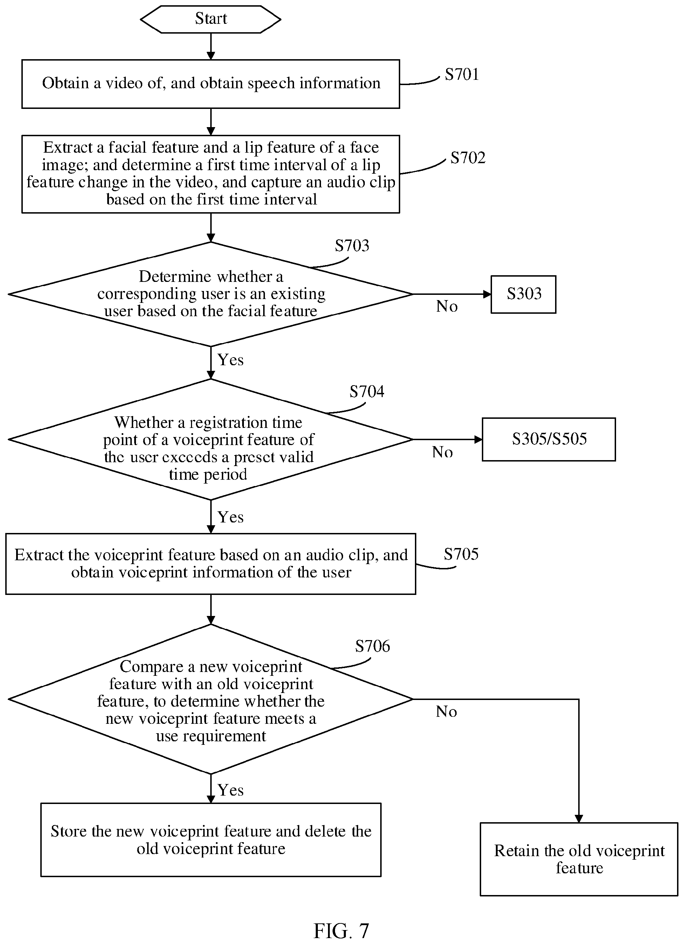

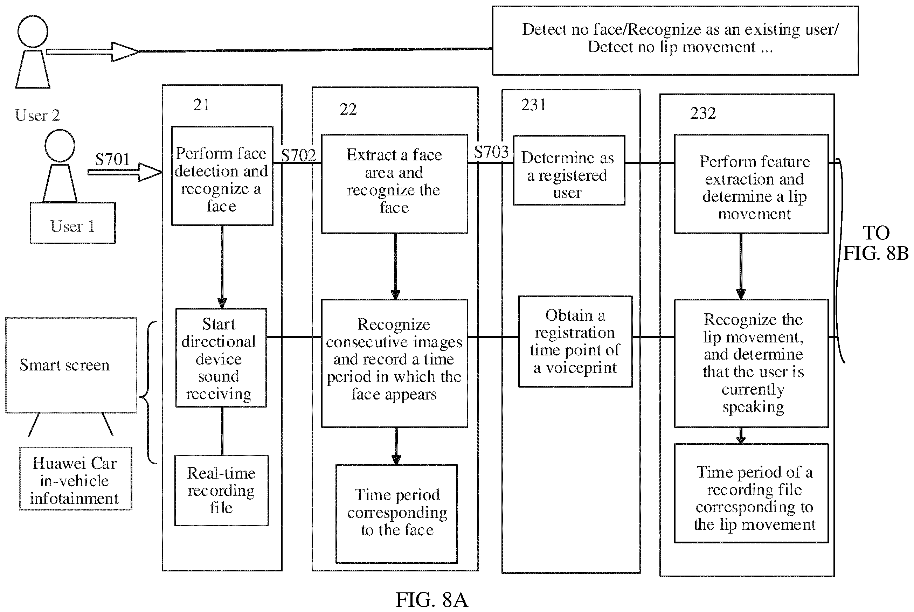

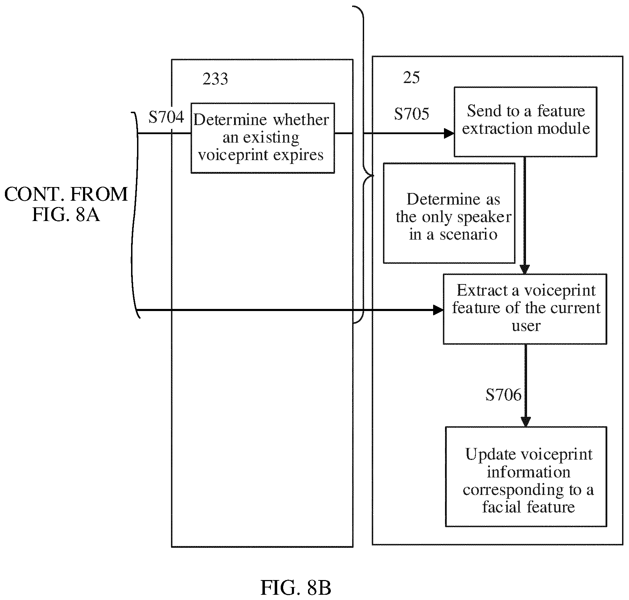

If a speech of the user changes with time due to a change of a physiological feature, and consequently a voiceprint feature of the user drifts, in a process of using the device by the user, data of an original voiceprint of the user in the device needs to be updated by extracting a new voiceprint feature. According to the speech operation method for the device provided in Embodiment 3 of this application, it is determined whether the voiceprint feature of the user stored in the feature memory 14 of the device meets a use requirement. If the voiceprint feature does not meet the use requirement, voiceprint information of the user is recorded when the user speaks alone, and previous voiceprint information is updated, so that the voiceprint feature of the user stored in the device meets the use requirement. This ensures accurate effects of speech separation and speech recognition. With reference to FIG. 7 and FIG. 8A and FIG. 8B, the following describes the technical solution in Embodiment 3 of this application based on Embodiment 1.

FIG. 7 is a flowchart in which a device autonomously updates voiceprint information of a plurality of users in a speech operation method for a device according to Embodiment 3 of this application. As shown in FIG. 7, the steps are as follows.

S701. Obtain a video of a user in an environment around a device through a camera 11, and obtain speech information of the user recorded by a sound receiving device 12. A specific implementation is similar to S301 in Embodiment 1, and details are not described herein again.

S702. Detect a face image in the video, and extract a facial feature and a lip feature of the face image; determine a time interval in which a relative location of the lip feature in the video changes on the face image, and capture a corresponding audio clip from the speech information based on the time interval. For a specific implementation, refer to S302 in Embodiment 1, and details are not described again.

S703. Recognize the user based on the facial feature, and obtain voiceprint information and a registration time point of the user.

In a possible implementation, whether a corresponding user is an existing user is determined based on a facial feature of each user; if the user is the existing user, a voiceprint feature and a registration time point of the existing user are obtained, and S704 is performed; and otherwise, S303 is performed.

For a specific implementation of determining whether the corresponding user is the existing user, refer to S3031 in Embodiment 1, and details are not described herein again.

S704. If a registration time point of the voiceprint feature of the user corresponding to a facial feature exceeds a preset valid time period, S705 is performed; or if a registration time point of the voiceprint feature is within a preset valid time period and does not need to be updated, S305 or S504 is performed.

S705. Extract a voiceprint feature based on the audio clip, and obtain the voiceprint information of the user. For a specific implementation, refer to S3041 to S3046 in Embodiment 1, and details are not described herein again.

S706. Compare a new voiceprint feature of the user with an old voiceprint feature of the user, determine whether the new voiceprint feature meets a quality requirement for voiceprint extraction, and if the new voiceprint feature meets the quality requirement, keep the new voiceprint feature and delete the old voiceprint feature. Otherwise, the old voiceprint feature is kept.

In a possible implementation, the new voiceprint feature is compared with the old voiceprint feature, and a voiceprint feature that is clean and clear and that may meet a use requirement is selected as the new voiceprint feature of the user, and the old voiceprint feature is deleted.

In the method provided in Embodiment 3 of this application, an interaction process of a functional module for autonomously updating voiceprint information of a plurality of users is shown in FIG. 8A and FIG. 8B, and details are not described again. When the existing user registered in the device exists in a current environment, it is determined that the current voiceprint feature needs to be updated based on the voiceprint information quality and the registration time point of each user, and when each existing user speaks alone, the voiceprint information of the user is extracted and the previous voiceprint feature is updated, to ensure timeliness of the voiceprint feature of the user in the system. This ensures the effect of the speech separation.

In Embodiment 3 of this application, for a problem that as the voiceprint of the registered user changes with time, the voiceprint feature of the user slightly drifts, a validity period of the voiceprint feature is autonomously detected, and the voiceprint feature is autonomously updated based on the validity period when a registration condition is met, to ensure timeliness of the facial feature and the voiceprint feature of the user stored in the device. This ensures the effect of the speech separation, and avoids a problem that a recognition effect is poor because the voiceprint feature does not meet the use requirement. In addition, there is no need to periodically remind the user to re-record the voiceprint or periodically check the voiceprint. Instead, the device autonomously manages, updates, and replaces the voiceprint feature information in a process of using the device by the user.

According to the speech operation method for the device provided in Embodiments 1 to 3 of this application, extraction, registration, and update of the voiceprint feature of the user may be autonomously completed. In a subsequent scenario in which the device is used, when a plurality of users simultaneously give speech control instructions to the device, mixed speeches may be separated for each user in the scenario based on a previously established correspondence between identities and the voiceprint information to obtain the audio information. This facilitates subsequent speech recognition and improves recognition accuracy. In addition, an intention decision may be made on speech recognition results corresponding to a plurality of pieces of separated speech information, and a speech instruction may be executed based on the decision.

According to the speech operation method for the device provided in Embodiments 1 to 3 of this application, good extraction and processing may be performed on speech instructions simultaneously gave by a plurality of users. This improves use experience of man-machine speech interaction and lowers a usage threshold of the user. Finally, voiceprint information may be better updated and managed by using the method in this application, without additional cooperation of the user.

In Embodiments 1 to 3 of this application, a smart device in a home use scenario is mainly used as a description object, and another suitable scenario also includes an in-vehicle environment. With popularization of new energy vehicles, more vehicle-mounted terminals have a camera 11 and a microphone 12. The method in this application may help a driver implement speech control on the vehicle-mounted terminal more conveniently, and separate and eliminate interference. This improves ease of use and safety of a driving operation. Similar application scenarios include a video conference room and an exhibition booth in which a plurality of users are present.

Embodiments of this application provide a speech operation apparatus for a device. A main control module 20 of the apparatus obtains a video collected by a camera, and obtains speech information collected by a microphone. A face detection module 21 detects a face image in the video. An image recognition module 22 extracts a lip feature and a facial feature of the face image. A lip feature recognition module 232 determines a time interval based on the lip feature, and captures a corresponding audio clip from the speech information based on the time interval. A voiceprint extraction module 30 obtains voiceprint information based on the facial feature. A speech recognition module 27 performs speech recognition on an audio clip based on the voiceprint information, to obtain the speech information.

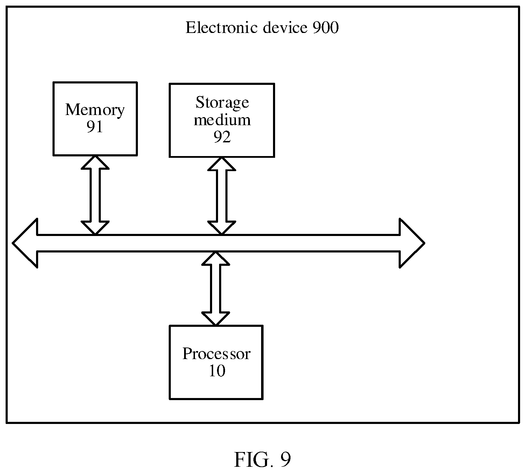

Embodiments of this application provide an electronic device 900. As shown in FIG. 9, the electronic device 900 includes a memory 91 and a processor 10. The processor 10 is configured to execute computer-executable instructions stored in the memory 91, and the processor 10 runs the computer-executable instructions to perform the speech operation method of the device according to any one of the foregoing embodiments.

Embodiments of this application provide a storage medium 92, including a readable storage medium and a computer program stored in the readable storage medium. The computer program is configured to implement the speech operation method for the device according to any one of the foregoing embodiments.

A person of ordinary skill in the art may be aware that, in combination with the examples described in embodiments disclosed in this application, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

In addition, aspects or features in embodiments of this application may be implemented as a method, an apparatus or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this application may indicate one or more devices and/or other machine-readable media that are configured to store information. The term "machine readable media" may include but is not limited to a radio channel, and various other media that can store, contain, and/or carry instructions and/or data.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, an access network device, or the like) to perform all or a part of the steps of the embodiment methods described in embodiments of this application. The storage medium includes any medium that can store program code, like a USB flash drive, a removable hard disk, a read-only memory (ROM, Read-Only Memory), a random access memory (RAM, Random Access Memory), a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application.

## Claims

1. A speech operation method for a device, wherein the method comprises:
obtaining a video collected by a camera;
obtaining speech information collected by a microphone;
detecting a face image in the video;
extracting a lip feature and a facial feature of the face image;
determining a time interval based on the lip feature;
capturing a corresponding audio clip from the speech information based on the time interval;
obtaining voiceprint information based on the facial feature; and
performing speech recognition on the audio clip based on the voiceprint information, to obtain the speech information.

2. The speech operation method for the device according to claim 1, wherein the obtaining speech information further comprises: detecting whether the face image exists in the video; and recording the speech information when the face image exists.

3. The speech operation method for the device according to claim 1 or 2, wherein a quantity of users is more than one, and the detecting a face image in the video, and extracting a lip feature and a facial feature of the face image comprises:
detecting a first face image and a second face image in the video,
extracting a first lip feature and a first facial feature from the first face image, and
extracting a second lip feature and a second facial feature from the second face image.

4. The speech operation method for the device according to claim 3, wherein the determining a time interval based on the lip feature and the capturing a corresponding audio clip from the speech information based on the time interval comprise:
determining a first time interval based on the first lip feature;
capturing a first audio clip from the speech information based on the first time interval;
determining a second time interval based on the second lip feature; and
capturing a second audio clip from the speech information based on the second time interval.

5. The speech operation method for the device according to claim 1, wherein the obtaining voiceprint information of a user comprises:
searching for corresponding voiceprint information in the device based on the facial feature, and obtaining the voiceprint information of the user.

6. The speech operation method for the device according to claim 3, wherein the obtaining voiceprint information of the user comprises:
searching for corresponding voiceprint information in the device based on the first facial feature, and obtaining first voiceprint information; and
searching for corresponding voiceprint information in the device based on the second facial feature, and obtaining second voiceprint information.

7. The speech operation method for the device according to claim 1, wherein the obtaining voiceprint information of the user comprises:
searching for corresponding voiceprint information in the device based on the facial feature, and if a search result is that the corresponding voiceprint information does not exist,
determining, based on the time interval, a third time interval in which the user is speaking alone; and
capturing a third audio clip from the speech information based on the third time interval, and extracting a voiceprint feature of the third audio clip, and obtaining the voiceprint information of the user.

8. The speech operation method for the device according to claim 4, wherein the obtaining voiceprint information of the user comprises:
searching for corresponding voiceprint information in the device based on the facial feature, and if a search result is that the corresponding voiceprint information does not exist,
determining, based on a difference between the first time interval and the second time interval, a third time interval in which it is determined that the user is speaking alone; and
capturing a third audio clip from the speech information based on the third time interval, and extracting a voiceprint feature of the third audio clip, and obtaining the voiceprint information of the user.

9. The speech operation method for the device according to claim 7 or 8, wherein the capturing a third audio clip from the speech information based on the third time interval, and extracting a voiceprint feature of the third audio clip further comprises:
recursively extracting, by using a TDAA algorithm, an audio signal whose audio feature strength is highest from top to bottom in sequence from the third audio clip, and deducing a quantity of users in a speaking state based on a quantity of extracted audio signals; and
extracting the voiceprint feature of the third audio clip when the quantity of users in the speaking state is 1.

10. The speech operation method for the device according to claims 7 to 9, wherein the obtaining voiceprint information of the user comprises:
establishing a correspondence between the facial feature and the voiceprint information of the user, and storing the facial feature and the voiceprint feature.

11. The speech operation method for the device according to claim 6, wherein the performing speech recognition on the audio clip based on the voiceprint information, to obtain the speech information comprises:
performing speech separation on the first audio clip based on the first voiceprint feature, to obtain first audio information;
performing speech recognition on the first audio information, to obtain first speech information;
performing speech separation on the second audio clip based on the second voiceprint feature, to obtain second audio information; and
performing speech recognition on the second audio information, to obtain second speech information.

12. The speech operation method for the device according to claim 1, wherein the method further comprises:
obtaining a registration time point of the voiceprint feature, and if the registration time point of the voiceprint feature exceeds a preset valid time period,
extracting a third voiceprint feature based on the audio clip, and updating the voiceprint information to the third voiceprint feature.

13. The speech operation method for the device according to claim 12, wherein the updating the voiceprint information to the third voiceprint feature comprises:
comparing the third voiceprint feature with the voiceprint feature, and keeping one of the two voiceprint features that is capable of meeting a use requirement, where the voiceprint feature that meets the use requirement is a clean and clear voiceprint feature.

14. A speech operation apparatus for a device, wherein the apparatus comprises:
a main control module, configured to obtain a video collected by a camera; and obtain speech information collected by a microphone;
a face detection module, configured to detect a face image in the video;
an image recognition module, configured to extract a lip feature and a facial feature of the face image;
a lip feature recognition module, configured to determine a time interval based on the lip feature, and capture a corresponding audio clip from the speech information based on the time interval;
a voiceprint extraction module, configured to obtain voiceprint information based on the facial feature; and
a speech recognition module, configured to perform speech recognition on the audio clip based on the voiceprint information, to obtain the speech information.

15. An electronic device, comprising a memory and a processor, wherein the processor is configured to execute computer-executable instructions stored in the memory, and the processor runs the computer-executable instructions to perform the speech operation method for a device according to any one of claims 1 to 13.

16. A storage medium, comprising a readable storage medium and a computer program stored in the readable storage medium, wherein the computer program is configured to implement the speech operation method for a device according to any one of claims 1 to 13
